(19) Europäisches Patentamt
European Patent Office
Office européen des brevets

(11) **EP 2 680 070 A1**

(12) **EUROPEAN PATENT APPLICATION**
published in accordance with Art. 153(4) EPC

(43) Date of publication:
**01.01.2014 Bulletin 2014/01**

(51) Int Cl.:
*G03B 21/00* (2006.01)    *G03B 21/62* (2006.01)

(21) Application number: **11859405.0**

(22) Date of filing: **25.02.2011**

(86) International application number:
**PCT/JP2011/054340**

(87) International publication number:
**WO 2012/114512 (30.08.2012 Gazette 2012/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Pioneer Corporation**
**Kawasaki-shi, Kanagawa 212-0031 (JP)**

(72) Inventors:
• **YOSHIOKA, Toshihiro**
**Kawasaki-shi**
**Kanagawa 212-0031 (JP)**

• **HIGUCHI, Takanobu**
**Kawasaki-shi**
**Kanagawa 212-0031 (JP)**
• **YOSHIKAWA, Takamasa**
**Kawasaki-shi**
**Kanagawa 212-0031 (JP)**

(74) Representative: **Haley, Stephen**
**Gill Jennings & Every LLP**
**The Broadgate Tower**
**20 Primrose Street**
**London EC2A 2ES (GB)**

(54) **DISPLAY DEVICE**

(57) A display device includes a screen (5), a projector (3) and a control unit (30). The screen (5) can change an optical state thereof. The projector (3) projects image light for displaying images on the screen (5). The control unit (30) switches the optical state of an area of the screen (5) from a transmissive state to a scattering state modulated by time or space so that the area has a regular transmittance with which, when viewed from either side of the screen (5), an object on the opposite side of the screen (5) can be recognized regardless of whether or not the image light is projected, the area including a spot where the image light is projected.

FIG. 1A

EP 2 680 070 A1

# FIG. 1B

# FIG. 1C

: TRANSMISSIVE STATE

: SCATTERING STATE

: TRANSMISSIVE STATE

: SCATTERING STATE

**Description**

TECHNICAL FIELD

The present invention relates to a display device which displays images.

BACKGROUND TECHNIQUE

Conventionally, there is known a technique for displaying images projected from a projector on a screen. For example, Patent Reference-1 discloses a technique for suppressing the motion blur by controlling the state of each vertically-segmented area of the screen to be switched between the first mode in which the reflex function is activated and the second mode in which the absorption function is activated.

Patent Reference-2 discloses a technique for suppressing the deterioration of contrast even in a bright room by setting a higher reflectance of the screen area that the image light is scanning than the reflectance of the area that the image light is not scanning in the case of projecting and scanning the image light on the screen in order to display images. Other techniques related to the present invention are disclosed in Patent Reference-3 to Patent Reference-6.

Patent Reference-1: Japanese Patent Application Laid-open under No. 2008-076973
Patent Reference-2: Japanese Patent Application Laid-open under No. 2008-310260
Patent Reference-3: Japanese Patent Application Laid-open under No. 2006-091258
Patent Reference-4: Japanese Patent Application Laid-open under No. 2005-114913
Patent Reference-5: Japanese Patent Application Laid-open under No. 2003-121943
Patent Reference-6: Japanese Patent Application Laid-open under No. H05-191726

DISCLOSURE OF INVENTION

PROBLEM TO BE SOLVED BY THE INVENTION

In recent years, there is proposed so-called "ambient display" which is a new type of display naturally showing various information on an arbitrary surface without making viewers aware of the display device. Any space where people act, that is not limited to the living space, has a boundary with the other space, the boundary being broadly separated into "transparent surface" and "non-transparent surface". To display some information on the transparent surface without losing the see-through function can lead to a new valuable application of the ambient display. The term "transparent surface" herein includes "empty space".

A current flat panel display has a display surface which is generally non-transparent in spite of a high performance and a high image quality, and light from an object existing in the background of the display is blocked regardless of whether or not during display. Thus, in order to see the object existing in the opposite side of the display surface, it is necessary to move the display or to move the view point so that the display does not obscure the eyesight. Thus, it is difficult to properly let the viewer visually recognize both the object in the background and display information without drastically moving the view point, so a new type of display device is needed.

The above is an example of the problem to be solved by the present invention. An object of the present invention is to provide a display device capable of displaying images on the whole display surface thereof while letting a viewer visually recognize an object in the background of the display surface, and also capable of having both high see-through property and high visibility.

MEANS FOR SOLVING THE PROBLEM

One invention is a display device comprising: a screen capable of changing an optical state thereof; a projector configured to project image light for displaying images on the screen; and a control unit configured to switch the optical state of an area of the screen from a transmissive state to a scattering state modulated by time or space so that the area has a regular transmittance with which, when viewed fromeither side of the screen, an object on the opposite side of the screen can be recognized regardless of whether or not the image light is projected, the area including a spot where the image light is projected.

BRIEF DESCRIPTION OF THE DRAWINGS

FIG. 1A shows an example of a schematic configuration of a display device according to the first embodiment. FIGS. 1B and 1C schematically show the variation of the optical state of the screen.

FIG. 2 is an example of controlling the see-through display state by adjusting the regular transmittance when the image is not projected.

FIG. 3A is an example of the schematic configuration of the display device according to the second embodiment. FIG. 3B shows a time chart for one frame period of the images for display, the time chart indicating the variation of whether or not the image is projected and the variation of the optical state of the screen.

FIG. 4A is an example of the voltage waveform between the electrodes of the screen in a case where the screen to which the voltage is applied becomes the transmissive state. FIG. 4B is an example of the voltage waveform between the electrodes of the screen in a case where the screen to which the voltage is applied becomes the scattering state.

FIG. 5A is an example of the schematic configuration of the display device according to the third embodiment. FIG. 5B is an example of a time chart indicating the variation of whether or not the image is projected on a predetermined segmented area and the variation of the optical state of the screen.

FIG. 6 is an example of the voltage waveform between the electrodes of the screen in a case where the screen to which the voltage is applied becomes the transmissive state.

FIG. 7 is an example of the voltage waveform between the electrodes of the screen in a case where the screen to which the voltage is applied becomes the scattering state.

FIG. 8 schematically shows a relationship between the scan position and the corresponding time when whole-area projection which projects RGB lights at a time on the whole display area is executed.

FIG. 9 schematically shows a relationship between the scanning position and the corresponding time when each of the RGB lights is projected on the whole display area at a different timing.

FIG. 10 shows a relationship between the scanning position and the corresponding time according to the area segmentation method.

FIG. 11 is an example that the scattering characteristic corresponding to each segmented areas becomes the same at the time of the image projection, i.e., an example that the image is projected during an equally-scattering period of each area.

FIG. 12 is an example of adjusting the time ratio between the scattering state and the transmissive state in order to control the see-through display state.

DETAILED DESCRIPTION OF THE PREFERRED EMBODIMENTS

According to one aspect of the present invention, there is provided a display device comprising: a screen capable of changing an optical state thereof; a projector configured to project image light for displaying images on the screen; and a control unit configured to switch the optical state of an area of the screen from a transmissive state to a scattering state modulated by time or space so that the area has a regular transmittance with which, when viewed from either side of the screen, an obj ect on the opposite  side of the screen can be recognized regardless of whether or not the image light is projected, the area including a spot where the image light is projected.

The above display device includes a screen, a projector and a control unit. The screen can change an optical state thereof. The projector projects image light for displaying images on the screen. The control unit switches the optical state of an area of the screen from a transmissive state to a scattering state modulated by time or space so that the area has a regular transmittance with which, when viewed from either side of the screen, an object on the opposite side of the screen can be recognized regardless of whether or not the image light is projected, the area including a spot where the image light is projected.

Here, the term "transmittance" herein indicates a ratio of amount of light going through the screen without scattering to amount of light entering the screen. The transmittance can be an index of visibility of the shape of an object existing in the background of the screen, and it is also expressed as "in-line transmittance". In this specification, the momentary regular transmittance indicating a state of a screen is referred to as regular transmittance. The above-mentioned expression "a regular transmittance with which, when viewed from either side of the screen, an object on the opposite side of the screen can be recognized" herein indicates time-averaged regular transmittance that can be an index of visibility of the object existing on the opposite side of the viewer when the system is activated, and is equal to or higher than the lower limit of a regular transmittance with which, when viewed from either side of the screen, the obj ect on the opposite side of the screen can be recognized. The lower limit is determined in advance through experimental trials, for example. In the above-mentioned configuration, the display device can display images on the whole display surface thereof while letting a viewer visually recognize an object in the background of the display surface, and can also have both high see-throughproperty and high visibility.

In one mode of the display device, the screen is capable of changing the optical state of each segmented area in a display area, and the projector projects the image light on the segmented areas of the screen by means of time division control. According to this mode, the device display can preferably display images on the whole display surface thereof while letting a viewer visually recognize an object in the background of the display surface, and can also have both high see-through property and high visibility.

In another mode of the display device, the screen is capable of changing the optical state of segmented areas into which a display area is divided in one direction, and the projector projects the image light on the segmented areas of the screen by means of time division control in a direction where the segmented areas are arranged. According to this mode, the display device can also display images on the whole display surface thereof while letting a viewer visually recognize an object in the background of the display surface, and can also have both high see-through property and high visibility.

In another mode of the display device, the screen is capable of changing the optical state of segmented areas into which a display area is vertically or horizontally divided or segmented areas each of which has a stripe shape. According to this mode, the display device can also display images on the whole display surface thereof while letting a viewer visually recognize an obj ect in the background of the display surface, and can also have both high see-through property and high visibility.

In another mode of the display device, the control unit controls the regular transmittance of the area of the screen in a transmissive state. The term "the area of the screen" herein indicates an area where the optical state is changed at the same time. In particular, the term indicates the whole display area of the screen in a case where the scattering state is modulated only by time, and indicates each segmented area of the display area in a case where the scattering state is modulated only by space. Thereby, the display device can change the visibility of the object existing in the background of the image, i.e., can suppress the see-through property.

In another mode of the display device, the control unit controls a time ratio between a transmissive state and a scattering state with respect to the area of the screen in a transmissive state. Thereby, the display device can change the visibility of the object existing in the background of the image, i.e., can suppress the see-through property.

In another mode of the display device, depending on whether or not the image light is projected, the control unit switches the optical state of the area of the screen between a transmissive state inwhich a regular transmittance is higher than a predetermined value and a state where a transmissive state and a scattering state modulated by time or space is alternately actuated so that the area has a regular transmittance with which, when viewed from either side of the screen, an object on the opposite side of the screen can be recognized. The predetermined value is a value higher than the regular transmittance at the time of the image projection, for example. Concretely, the predetermined value is determined in advance through experimental trials. In this mode, the display device can switch the optical state between a state having a high transmittance and a see-through display state depending on images for display. Thus, the display device can display images on the screen in a state where the background object thereof can be more clearly seen.

In another mode of the display device, depending on whether or not the image light is projected, the control unit switches the optical state of the area of the screen between a state where a transmissive state is kept and a state where a transmissive state and a scattering state modulated by time or space is alternately actuated so that the area has a regular transmittance with which, when viewed from either side of the screen, an obj ect on the opposite side of the screen can be recognized. Thereby, the display device can suppress the see-through property.

In another mode of the display device, in a case where the control unit switches the optical state between a transmissive state and a scattering state with respect to each segmented area into which the screen is divided and where the control unit changes a scan speed at which the image light scans on the screen, width of a segmented area where the scan speed is high is longer in a scan direction than width of a segmented area where the scan speed is low. Thereby, the display device can suppress the output of the drive circuit even when it changes the scan speed.

In another mode of the display device, in a case where the control unit switches the optical state between a transmissive state and a scattering state with respect to each predetermined segmented area into which the screen is divided, the control unit equalizes each time ratio between a transmissive state and a scattering state with respect to each of the segmented areas. Thus, preferably, the display device can achieve the see-through property evenly.

In another mode of the display device, the control unit controls the regular transmittance of the area of the screen by changing a time ratio between a transmissive state and a scattering state with respect to the area. Thereby, preferably, the display device can easily control the regular transmittance of a predetermined area.

In another mode of the display device, the control unit switches the optical state of the area including the spot where the image light is projected to a scattering state before the image light is projected. Thereby, in the case of a reflective type of screen, the display device can suppress the amount of the image light projected on the object in the background of the screen from the projector to the minimum thereby to suppress undesirable effect to the color recognition. In contrast, in the case of a transparent type of screen, it is possible to suppress the leak of the projected light towards the viewer.

In another mode of the display device, in a case where the control unit switches the optical state between a transmissive state and a scattering state with respect to each predetermined segmented area into which the screen is divided, the control unit equalizes scattering characteristics of the segmented areas while the image light is projected thereon. Thereby, the display device can suppress the block noise whose boundary stands out.

EMBODIMENT

Now, preferred embodiments of the present invention will be described below with reference to the attached drawings.

<First Embodiment>

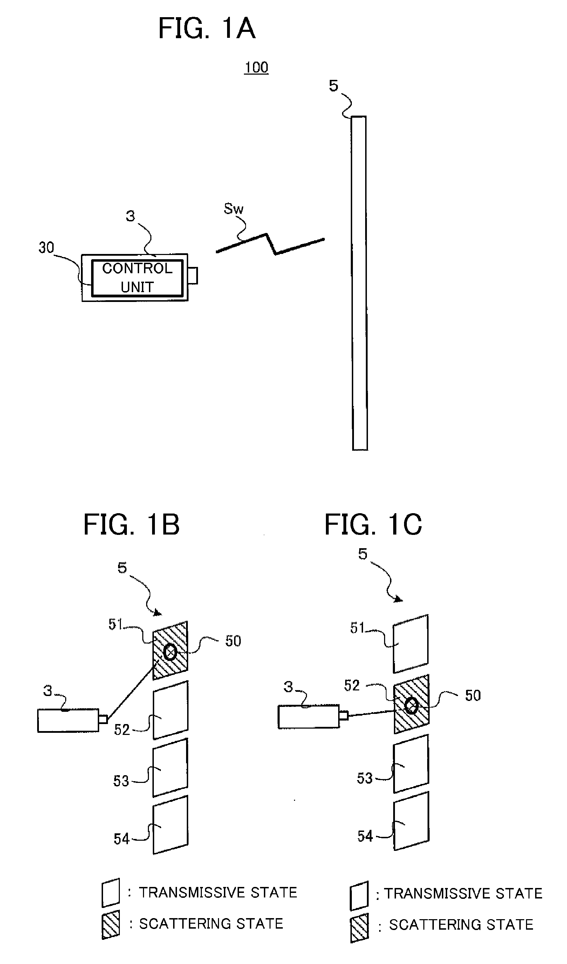

FIG. 1A shows an example of a schematic configuration of a display device 100 according to the first embodiment. As shown in FIG. 1A, the display device 100 includes a projector 3 projecting images and a screen 5 capable of changing the optical property thereof.

The projector 3 projects light for displaying a full-screen image once in a part of the frame period of the image. For example, the projector 3 includes a liquid crystal light valve equipped with color filters and/or a reflective liquid crystal element, and projects white light composed of the three primary colors, i.e., RGB, thereto. Thereby, the reflected light or the transmitted light necessary for displaying a predetermined image forms the image on the display surface of the screen 5 through the optical system. In this case, as a white light source, the projector 3 includes a pulse-driven flashlamp, a white LED lamp or a laser that can output light composed of RGB, for example.

It is noted that the projector 3 may be a 3 light valves projector. Namely, in this case, by using liquid crystal light valves each corresponding to each color selected from RGB or a reflective liquid crystal element (e.g. LCOS: Liquid Crystal On Silicon), the projector 3 outputs beams from each pulse-driven light source corresponding to each color selected from RGB. Then, the projector 3 overlaps these beams through the optical system to let the reflected light or the transmitted light necessary for displaying a predetermined image form the image on the display surface of the screen 5. In this case, each of the RGB light sources may be a LED or a laser with a color selected from RGB, for example. The projector 3 also includes a control unit 30 having a CPU (Central Processing Unit), a ROM (Read Only Memory) and a RAM (Random Access Memory), the control unit 30 controlling the projector 3 and the state of the screen 5.

The screen 5 can change its optical state between a transmissive state and a scattering state. For example, the screen 5 is configured of a polymer-dispersed liquid crystal and/or an element which controls the scattering state by moving white powder in the transparent cells, the polymer-dispersed liquid crystal changing the refraction index of a liquid crystal cells formed into particles.

The screen 5 receives a control signal (referred to as "control signal Sw") for changing the state of the screen 5 from the projector 3. Thereby, the screen 5 is switched from the transmissive state to the scattering state before it is irradiated by the pulsed image light outputted from the projector 3, and the screen 5 is switched from the scattering state to transmissive state after it is irradiated with the image light. In this case, it is desirable that the screen 5 in the scattering state has an optical property to effectively scatter the light towards the viewer's side as much as possible. The above-mentioned control signal Sw is generated by the control unit 30 of the projector 3 and is sent to the screen 5 through an electronic connection or a wireless communication means by use of electromagnetic wave such as microwave, visible light and infrared light. The control signal Sw may be sent to the screen 5 and received by the screen 5 coupled with the image or in the same way as the image.

FIGS. 1B and 1C show an example of the variation of the optical state of the screen 5. In FIG. 1B, a predetermined area  51 including an irradiated area 50 is in the scattering state and other areas 52 to 54 are in the transmissive state, the irradiated area 50 irradiated by the image light outputted from the projector 3. In the FIG. 1C, in accordance with the transition of the irradiated area 50 on the screen 5, the area 52 newly including the irradiated area 50 is in the scattering state and the other areas 51, 53, 54 are in the transmissive state. It is noted that the variation of the optical state is not limited to the example shown in FIGS. 1B and 1C and that the screen 5 can switch the optical state of the whole area thereof at the same time between the transmissive state and the scattering state.

As mentioned above, when the screen 5 is irradiated with the image light, the area including the irradiated area 50 becomes the scattering state thereby to display the image, and when the screen 5 is not irradiated with the image light, the screen 5 becomes the transmissive state. Thus, the variation is visually recognized by the viewer to be averaged (integrated), and it is possible to achieve the see-through property that the screen 5 is transparent even in a bright display state.

Here, a description will be given of a concrete method for controlling the state of the screen 5.

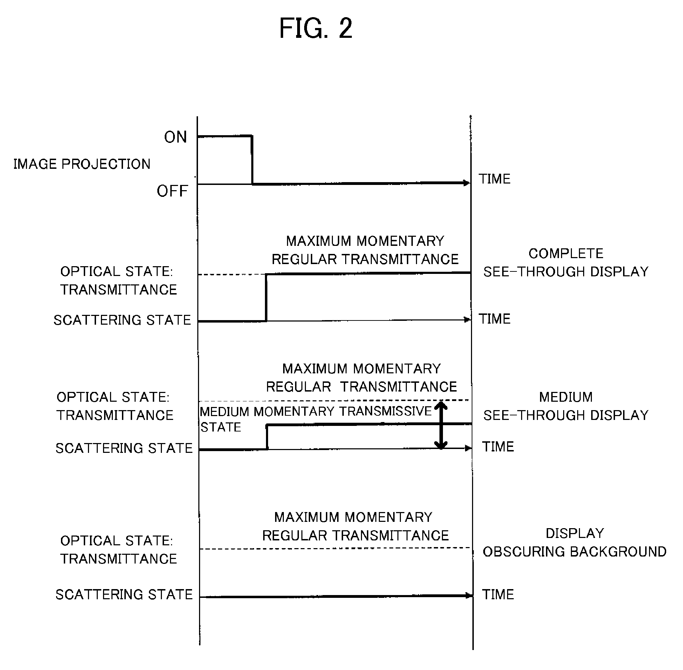

By adjusting the scattering intensity of the screen 5 in the transmissive state, the display device 100 can change the visibility of an object existing behind the display device 100. For example, in a case where a polymer-dispersed liquid crystal is used as the screen 5, the screen 5 changes the alternating-current voltage to be applied at the time when the screen 5 is in the transmissive state under the control of the control unit 30. Thereby, the scattering intensity of the screen 5 is controlled as shown in FIG. 2. In this case, the scattering intensity of the screen 5 becomes the same value at the time when the image light is projected. Thereby, it is possible to control the regular transmittance while keeping the brightness of the display unchanged.

In the case of adjusting the scattering intensity of the screen 5 in the transmissive state, the display device 100 can disable or suppress the see-through property to the minimum by controlling the screen 5 so that the scattering intensity of the screen 5 in the transmissive state is equal to the scattering intensity at the time when the screen 5 is irradiated with the image light. By controlling the screen 5 in the above-mentioned way with a period of hundreds milliseconds for example, the control unit 30 can let the viewer see the movement in the background as a frame-by-frame playback. In a case where the control unit 30 displays some notable information, by controlling the screen 5 in the above-mentioned way in the initial few seconds, the control unit 30 can lay out a situation in which the viewer attentively watches not the background but the images on the display surface of the screen 5.

While the image light is not projected, the display device 100 may keep the screen 5 in the transmissive state without putting the screen 5 in the scattering state. For example, in this case, the projector 3 inserts a black image (i.e., no projected light) into the images for display with a period of hundreds milliseconds. Thereby, the image on the display surface of the screen 5 alternately has a state with a high transmittance and a see-through display state. As a result, the display device 100 can display images on the screen 5 in a state where an object in the background can be more clearly seen.

<Second Embodiment>

Next, the second embodiment will be described. In summary, the display device 100 according to the second embodiment displays images based on a method (referred to as "time division method") which modulates the optical state of the screen 5 by time.

Hereinafter, the explanation of the same elements as the first embodiment will be omitted. In addition, a range where images are displayed on the display surface of the screen 5 is simply referred to as "display range", and the other range where the image are not displayed on the display surface of the screen 5 is referred to as "non-display range".

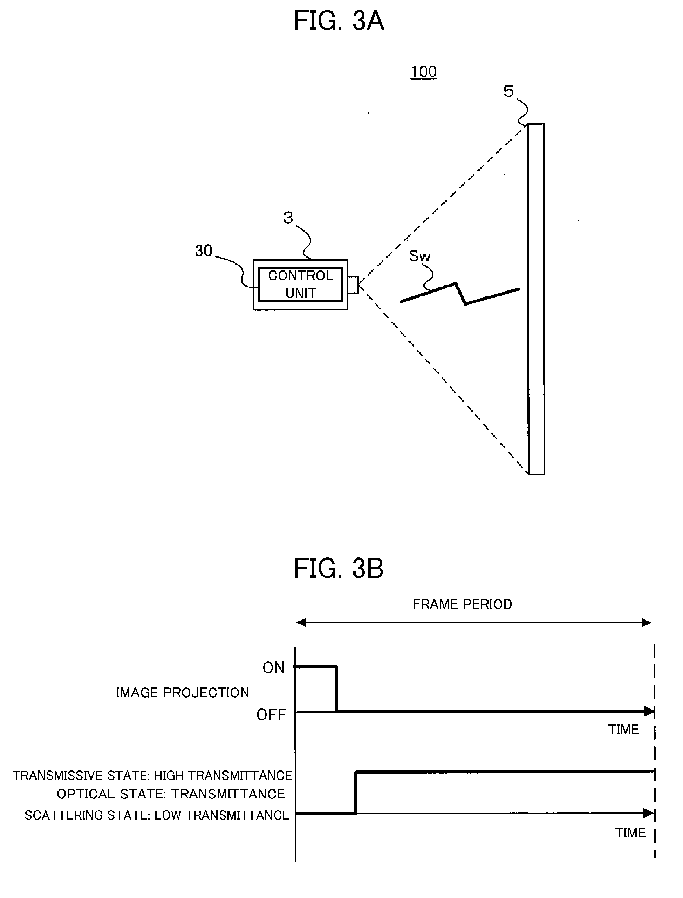

FIG. 3A is an example of the schematic configuration of the display device 100 according to the second embodiment.

As shown in FIG. 3A, the projector 3 projects the light for displaying the whole image on the screen 5. At that time, the projector 3 projects the image light corresponding to at least one image at least once in a part of the frame period of the image for display. As the above-mentioned system of the projector 3, a system that the light from each RGB light source is projected by time division can be used, the light being projected on a liquid crystal light valve, a reflective liquid crystal element or a digital micro-mirror device. In this case, each of the RGB light sources is a LED or a laser outputting a color selected from RGB, for example.

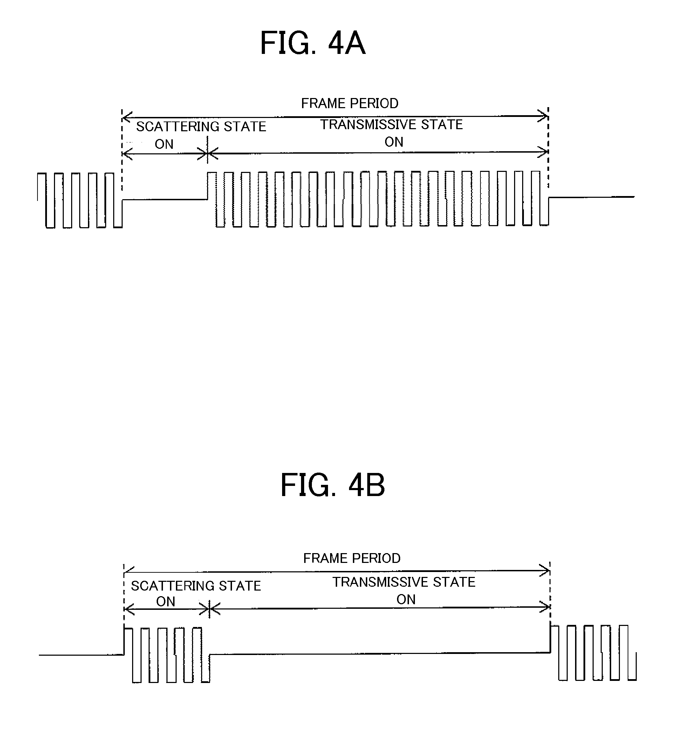

In the same way as the first embodiment, the screen 5 can change its optical state between the transmissive state and the scattering state. For example, the screen 5 can be formed by a polymer-dispersed liquid crystal and/or an element which controls the scattering state by moving white powder in the transparent cell, the polymer-dispersed liquid crystal changing the refraction index of a liquid crystal cell formed into particles. The screen 5 can change its optical state between the transmissive state and the scattering state with respect to the whole display surface or the whole display area at a time. The example thereof will be given with reference to FIGS. 4A and 4B.

FIG. 3B shows an example of a time chart indicating the variation of whether or not the image is projected and the variation of the optical state of the screen 5 for one frame period of the images for display. As shown in FIG. 3B, the projector 3 projects the image light in a part of the frame period of the images for display. Concretely, when "IMAGE PROJECTION" in FIG. 3B is "ON", the image light is projected from the projector 3 at least once.

By the time the image light is projected, the screen 5 has already switched the optical state of the display area or its whole area from the transmissive state to the scattering state. Thereby, images are displayed on the screen 5. When the screen 5 is not irradiated with the image light, the screen 5 is in the transmissive state. Thus, the image is visually recognized by the viewer to be averaged (integrated), and it is possible to achieve the see-through property that the screen 5 is transparent even in a bright display state.

Next, with reference to FIGS. 4Aand 4B, two concrete example will be described relating to the voltage control of the screen 5 at the time of switching the optical state of the screen 5 between the transmissive state and the scattering state.

FIG. 4A is an example of the voltage waveform between the electrodes of the screen 5 in a case where the screen 5 to which the voltage is applied becomes the transmissive state. As shown in FIG. 4A, when the voltage is not applied, the whole surface or the whole display area of the screen 5 becomes the scattering state. In contrast, when the voltage is applied, the whole surface or the whole display area of the screen 5 becomes the transmissive state.

FIG. 4B is an example of the voltage waveform between the electrodes of the screen 5 in a case where the screen 5 to which the voltage is applied becomes the scattering state. In this case, as shown in FIG. 4B, when the voltage is not applied, the whole surface or the whole display area of the screen 5 becomes the transmissive state. In contrast, when the voltage is applied, the whole surface or the whole display area of the screen 5 becomes the scattering state.

<Third embodiment>

Next, the third embodiment will be described. In summary, the display device 100 according to the third embodiment displays images based on a method (referred to as "area segmentation method") which changes the optical state of the screen 5 with respect to each predetermined area according to the scan position on the screen 5. Hereinafter, the explanation of the same elements as the first embodiment will be omitted.

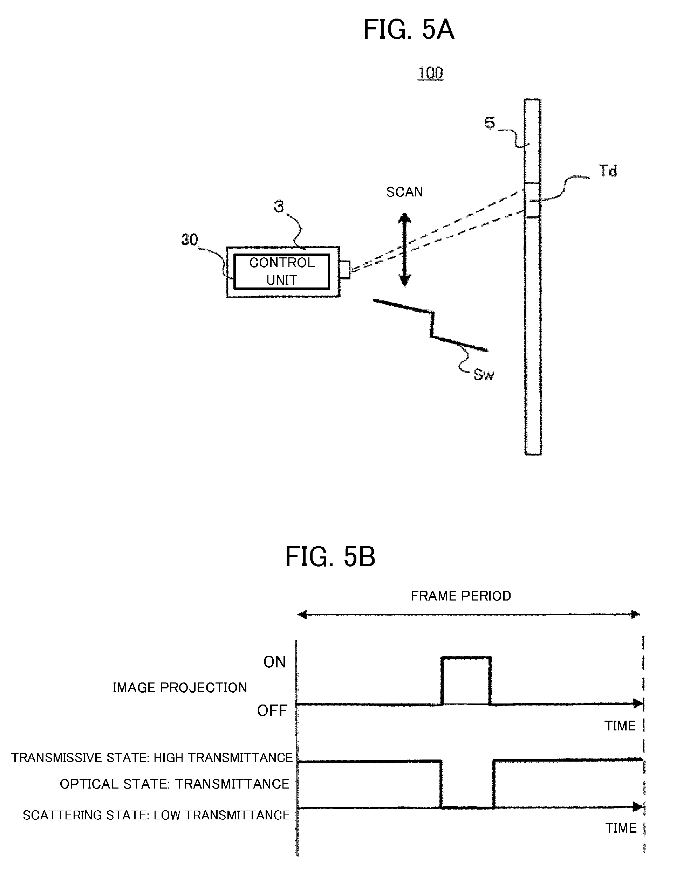

FIG. 5A is an example of the schematic configuration of the display device 100 according to the third embodiment. As shown in FIG. 5A, the projector 3 which projects images projects images each formed into a line shape in sequence on the display surface of the screen 5 in the frame period of the image for display.

The projector 3 can be formed by a liquid crystal light valve or a reflective liquid crystal element which serially shifts (i.e., scans) the area to be projected in the whole image per one frame, for example.

Under the control of the control unit 30, the screen 5 switches the optical state of each segmented area (hereinafter referred to as "segmented area Td") between the transmissive state and the scattering state at each different timing, the segmented areas Td each formed into a stripe shape in accordance with the scan direction of the projector 3. For example, the screen 5 can be formed by a polymer-dispersed liquid crystal and/or an element which controls the scattering state by moving white powder in the transparent cell, the polymer-dispersed liquid crystal changing the refraction index of a liquid crystal cell formed into particles.

FIG. 5B shows a time chart indicating the variation of whether or not the image is projected with respect to a predetermined segmented area Td and the variation of the optical state of the predetermined segmented area Td. As shown in FIG. 5B, before the image light is projected from the screen 5, each segmented area Td of the screen 5 switches the optical state from the transmissive state to the scattering state. Furthermore, after the projection of the image light, the screen 5 switches the optical state from the scattering state to the transmissive state. Thus, the optical state of each segmented area Td is switched in sequence. In the same way as the first embodiment, it is preferred that the screen 5 has an optical property to effectively scatter the light on the side of the viewer as much as possible.

The timing of switching the optical state of the above-mentioned screen 5 is controlled by the control unit 30 of the projector 3. In particular, the control unit 30 sends the control signal Sw indicating the timing of switching the optical state to the screen 5 through an electronic connection or a wireless communication means by use of electromagnetic wave such as microwave, visible light and infrared light, for example. Then, the screen 5 switches the optical state based on the control signal Sw.

It is preferred that the control signal Sw includes information on the timing of starting the scan of the projector 3, information on the scan speed and information on the delay or the shift of the scan, though the control signal Sw can be used only for synchronization of the frame period. Thus, on the basis of the control signal Sw, the screen 5 can preferably achieve the see-through display without disruption of the images even when the frame frequency varies.

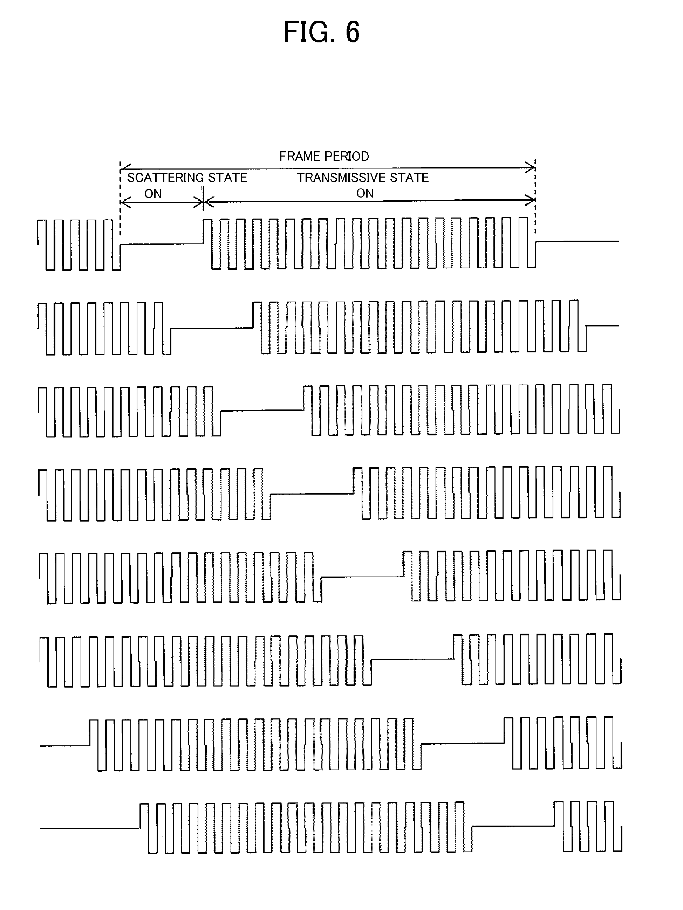

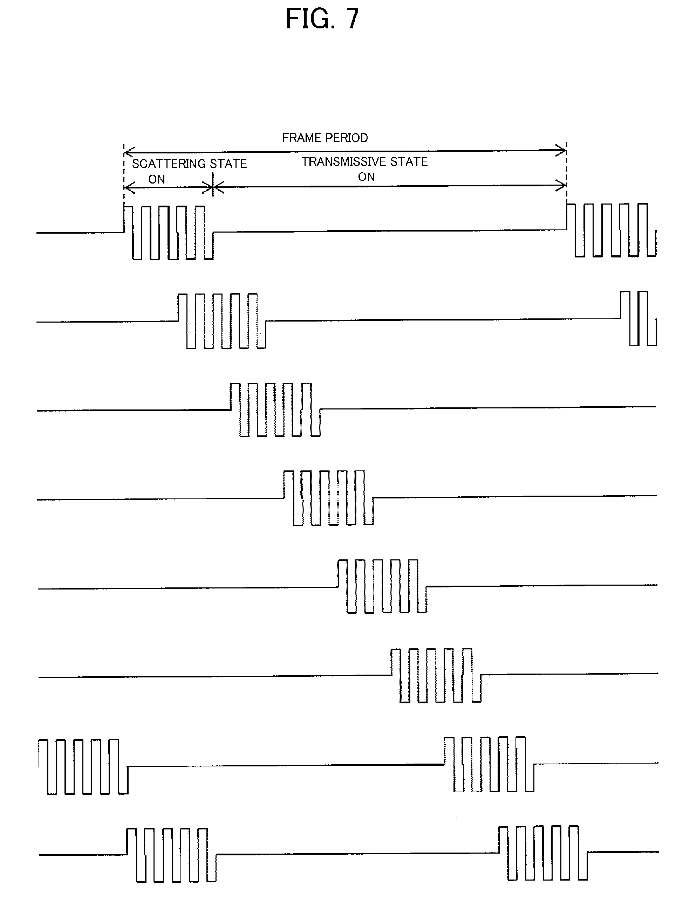

Next, with reference to FIGS. 6 and 7, two concrete example will be described relating to the voltage control of the screen 5 at the time of switching the optical state of the screen 5 between the transmissive state and the scattering state.

FIG. 6 is an example of the voltage waveforms between the electrodes of the screen 5 in a case where the screen 5 to which the voltage is applied becomes the transmissive state. FIG. 6 shows an example of eight-division scan modulation method which divides the display surface of the screen 5 into eight segmented areas Td. In FIG.6, the voltage waveforms to be applied to the eight segmented area Td are vertically arranged.

As shown in FIG. 6, the segmented areas Td to which the voltage is applied become the transmissive state whereas the segmented areas Td to which the voltage is not applied become the scattering state. In consideration of the transition time taken for switching the optical state, before the segmented area Td in the scattering state is switched to transmissive state, another segmented area Td is switched from the transmissive state to the scattering state.

FIG. 7 is an example of the voltage waveforms between the electrodes of the screen 5 in a case where the screen 5 to which the voltage is applied becomes the scattering state. In the same way as FIG. 6, FIG. 7 shows an example of eight-division scan modulation method which divides the display surface of the screen 5 into eight segmented areas Td, and the voltage waveforms to be applied to the eight segmented area Td are vertically arranged.

As shown in FIG. 7, the segmented areas Td to which the voltage is applied become the scattering state whereas the segmented areas Td to which the voltage is not applied become the transmissive state. In consideration of the transition time taken for switching the optical state, before the segmented area Td in the scattering state is switched to transmissive state, another segmented area Td is switched from the transmissive state to the scattering state.

<Fourth Embodiment>

The fourth embodiment is different from the first to third embodiments in that the projector 3 executes the raster scan in the frame period of the images for display and projects dots of the image in sequence on the display surface of the screen 5. The explanation which overlaps with the first to the third embodiments will be omitted.

According to the fourth embodiment, the projector 3 is a projector which controls the direction of optical beams by its mirror such as a laser projector.

Under the control of the 30, an area including the point scanned on the screen 5 becomes the scattering state so that the area transits in accordance with the scanning direction of the projector 3. It is noted that the area including the point scanned on the screen 5 becomes the scattering state before the irradiation of the image light by the projector 3.

Thereby, the screen 5 becomes the scattering state at the time when the screen 5 is irradiated with the image light to display images whereas the screen 5 becomes the transmissive state at the time when the screen 5 is not irradiated with the image light. As a result, in the same way as the other embodiments, the display device 100 according to the fourth embodiment can have the see-through property that the screen 5 is transparent even in the bright display state since the images are visually recognized by the viewer to be averaged (integrated).

<Effect>

Next, a supplemental explanation will be given of a basic technique necessary for realizing the display device 100 according to the first to the fourth embodiments.

The light projected on the screen 5 from the projector 3 is scattered on the display surface (simply referred to as "display surface") of the screen 5 thereby to be recognized by the viewer as images on the screen 5.

The transmittance of the display surface depends on the time ratio of the scattering state to the transmissive state. Provided that the regular transmittance in the case of the transmissive state is referred to as "Tr0", the regular transmittance in the case of the scattering state is referred to as "Trs", the time ratio of the transmissive state to all optical states is referred to as "R", and that the modulation is repeated with a period short enough to be at most dozens milliseconds, the time-averaged regular transmittance "Tr" of the display surface which the viewer actually perceives is determined according to the following equation (1).

$$\mathrm{Tr} = \{\mathrm{Tr0} \times \mathrm{R}\} + \{\mathrm{Trs} \times (1-\mathrm{R})\}. \quad (1)$$

It is assumed herein that transition time between each state is short enough to be ignorable. For example, if "Tr0 = 70%, Trs = 10%, R = 0.60", the regular transmittance in the see-through state at the time of displaying images is approximately 50% (i.e., Tr is approximately 0.5). This leads to a high transparency i.e, see-through property enough for the viewer to see an obj ect existing in the background. As shown in the equation (1), in order to enhance the see-through property, i.e., to increase the regular transmittance Tr, it is necessary to increase the regular transmittance Tr0 in the transmissive state, to decrease the regular transmittance Trs in the scattering state, and to increase the time ratio R in the transmissive state.

In contrast, the brightness of the image projected on the display surface depends on the intensity of the projected light and the scattering intensity. The directional characteristics are not mentioned here. Provided that the time variation of the intensity of the light projected on a predetermined area "j" is "Ij (t)", the time variation of the light scattering efficiency is "Sj (t)" and that the light flux of the projector 3 is "$I_C$", an index (hereinafter referred to as "brightness index B") proportional to the brightness is

$$\mathrm{B} = \mathrm{I_0} \cdot \int \mathrm{Ij}(t) \cdot \mathrm{Sj}(t)/\mathrm{T} \cdot \mathrm{dt} \quad (\text{the integral time is one period,}$$
$$\text{i.e., } 0 \sim \mathrm{T}),$$

wherein the intensity Ij (t) is regularized (normalized) in terms of one period. Here, the time ratio "Reff" corresponding to the effective transmissive state is approximately

$$\mathrm{Reff} = 1 - \int \mathrm{Sj}(t)/\mathrm{T} \cdot \mathrm{dt} \quad (\text{the integral time is one period,}$$
$$\text{i.e., } 0 \sim \mathrm{T}).$$

In the case of a steady-state screen, the maximumbrightness index "Bmax" is obtained regardless of "Ij(t)" because Sj (t) is approximately 1 (max and const.). However, in this case, since "Reff (approximately R) = 0", the regular transmittance is too small to obtain the see-through property.

Assuming that "Sj (t) =1; $0 \leq t \leq 0.2T$" ("T" is a frame period), the time ratio Reff (approximately R) is 0.8, and the brightness index B is approximately "Bmax/5" if "Ij (t) = $I_o$ = const.". Thus, in order to increase the brightness index B, the time ratio Reff has to become small and this ruins the see-through property.

Here, if "lj(t)=10×I$_o$; 0.05T≤t≤0.15T", it is possible to increase the brightness index B up to the maximum brightness index Bmax while keeping the regular transmittance 50% thereby to achieve the see-through display, i.e., to balance a high transparency with the visibility of the display image. In order to obtain a high brightness index and a high light use efficiency as with a steady screen, it is necessary to meet the equation "Sj(t)=1" at a timing that lj(t) is not equal to 0.

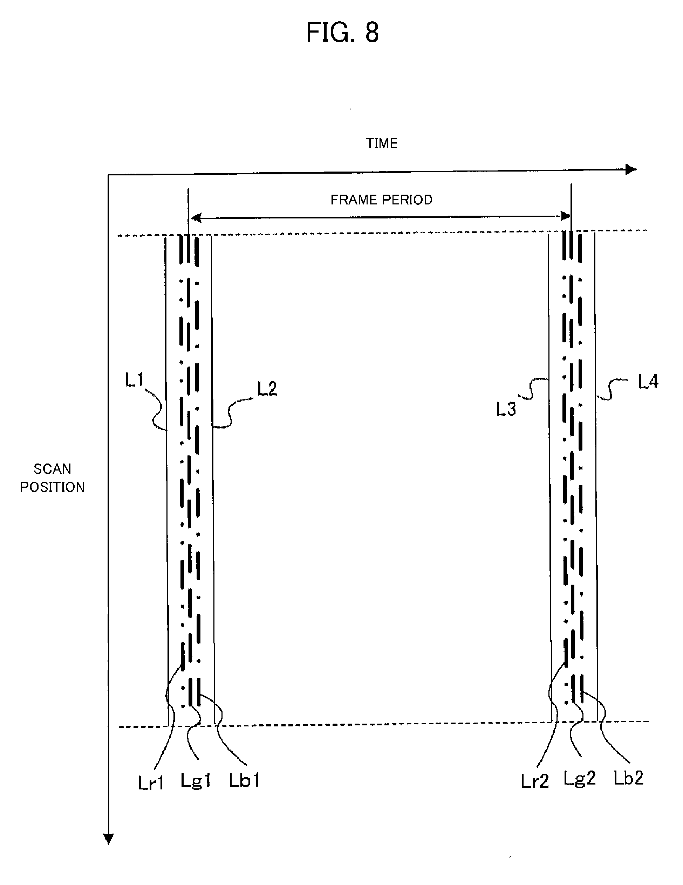

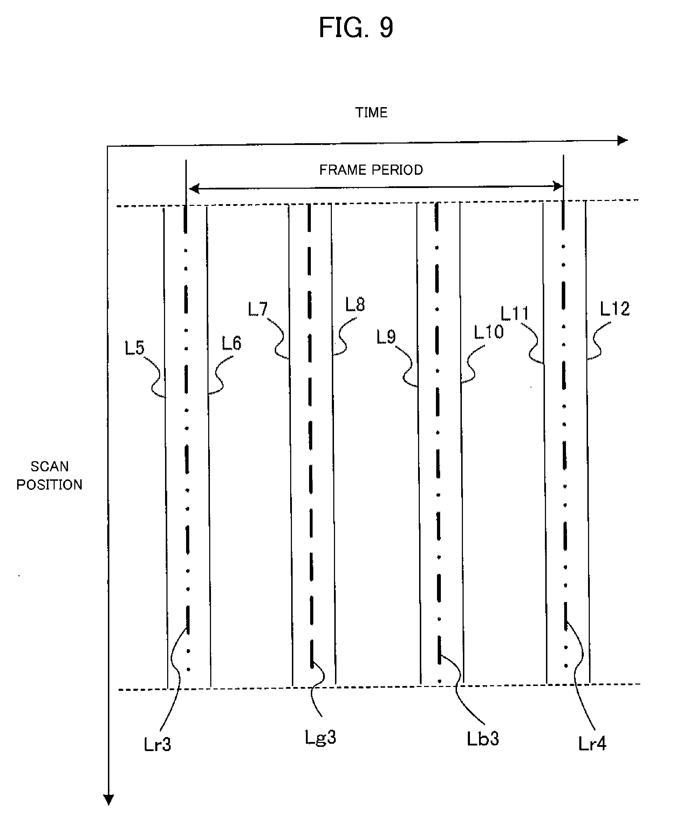

Here, regarding the time division method according to the second embodiment, a description will be given of a relationship between the time variation "I (t) " of the intensity of the projected light normalized in terms of one period and the time variation "S (t) " of the light scattering efficiency normalized in terms of one period with reference to FIGS. 8 and 9.

FIG. 8 shows a relationship between the scanning positions and the corresponding time when "whole-area projection" is executed. In the whole-area projection, RGB lights are projected at a time on the whole display area, respectively. Concretely, the term "scanning position" herein indicates a position of the screen 5 in the vertical direction. In FIG. 8, the two-dot chain lines "Lr1" and "Lr2" each indicates positions and the corresponding time that the red light (R) is projected. The dashed lines "Lg1" and "Lg2" each indicates positions and the corresponding time that the green light (G) is projected. The alternate long and short dash lines "Lb1" and "Lb2" each indicates positions and the corresponding time that the blue light (B) is projected. The area sandwichedbetween solid lines "L1" and "L2" and the area sandwiched between solid lines "L3" and "L4" each indicates scanning positions and the corresponding time of the screen 5 controlled so that the optical state thereof is switched to the scattering state. It is only necessary to project the image in a period at least including the time when the areas each sandwiched between the lines "L1" and "L2" or between the lines "L3" and "L4" is switched to the scattering state, although the positions proj ectedby the RGB lights and the corresponding time are indicated by the lines in FIG. 8.

As shown in FIG. 8, in the case of the whole-area projection, the whole display area of the projector 3 is kept in the scattering state in a period including a timing of the projection of the RGB lights. The example shown in FIG. 5 corresponds to a system similar to a so-called 3 light valves projector which projects the RGB lights at a time, a 1 light valve projector with a white light source and a color filter.

FIG. 9 shows a relationship between scanning positions and the corresponding time that each of the RGB lights is projected on the whole display area at different timings. In FIG. 9, the two-dot chain lines "Lr3" and "Lr4" each indicates positions and the corresponding time that the red light (R) is projected. The dashed line "Lg3" indicates positions and the corresponding time that the green light (G) is projected. The alternate long and short dash line "Lb3" indicates positions and the corresponding time that the blue light (B) is projected. The area sandwiched between solid lines "L5"and "L6", the area sandwiched between solid lines "L7" and "L8", the area sandwiched between solid lines "L9" and "L10" and the area sandwiched between solid lines "L11" and "L12" each indicates scanning positions and the corresponding time that the optical state of the screen 5 is switched to the scattering state. It is only necessary to project the image in a period at least including the time when the areas each sandwiched by the lines "L5" and "L6" or other pairs of lines is switched to the scattering state, although the positions proj ectedby the RGB lights and the corresponding time are indicated by the lines shown in FIG. 9.

In this case, as shown in FIG. 9, the optical state of the screen 5 is switched from the transmissive state to the scattering state at each timing that each RGB light is projected on the screen 5. In the same way as the whole-area projection, the whole display area of the projector 3 is kept in the scattering state during the time including each timing when each RGB light is projected. This example corresponds to a system similar to a 1 light valve protector whichproj ects each RGB light at a different timing or a projector which divides the display area into subfields by use of a digital micro-mirror device (DMD).

When the time division is applied to the projection of RGB lights as mentioned above, the display device 100 can especially scatter the projected wavelength instead of scattering all wavelengths. Thereby, the display device 100 can suppress the deterioration of the see-through property due to the decrease of the time ratio R in the transmissive state. In this case, for example, the display device 100 has scattering layers corresponding to each wavelength, and modulates with respect to a particular layer corresponding to a particular color to be displayed when the display device 100 displays only the color.

Next, a description will be given of the area segmentation method according to the third embodiment. Hereinafter, a description will be given of a representative example in which the area of the display surface is divided by one dimension. It is noted that the explanation described later can also be applied to a case of the division by two dimensions.

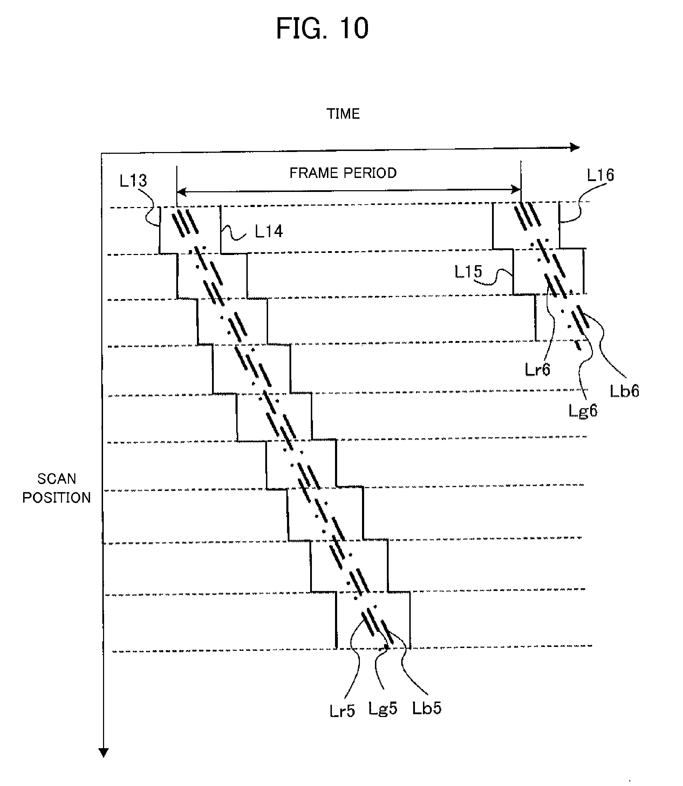

FIG.10 indicates a relationship between scanning positions according to the area segmentation method and the corresponding time. In FIG. 10, the two-dot chain lines "Lr5" and "Lr6" each indicates positions and the corresponding time that the red light (R) is projected. The dashed lines "Lg5" and "Lg6" each indicates positions and the corresponding time that the green light (G) is projected. The alternate long and short dash lines "Lb5" and "Lb6" each indicates positions and the corresponding time that the blue light (B) is projected. The area sandwiched between solid lines "L13"and "L14" and the area sandwiched between solid lines "L15" and "L16" each indicates the scanning positions and time that the optical state of the screen 5 is switched to the scattering state. It is only necessary to project the image in a period at least including the time when the areas each sandwiched between the lines "L13" and "L14" or other pairs of lines is switched to the scattering state, although the positions projected by the RGB lights and the corresponding time are indicated by the lines in FIG. 10.

In the example shown in FIG. 10, the image light is scanned in a particular direction at a steady speed. Then, the display device 100 switches the optical state of a segmented area of the screen 5 from the transmissive state to the scattering state, the segmented area including an area irradiated with the image light.

Although the area segmentation method has such an disadvantage that the drive circuit (in the case of electrical switching) has to have multiple channels, it does not need high intensity of the light source in a short time needed in the two examples shown in FIGS. 8 and 9, and it can achieve steady and bright display with relative ease. A laser scanning projector can be used for an example shown in FIG. 10.

Next, a supplemental description will be given of the method for controlling the transmittance of the see-through display. For example, the display device 100 adjusts the regular transmittance in the transmissive state. In another example, the display device 100 executes pulse width modulation (PWM) with respect to the scattering state. Thereby, the display device 100 can achieve preferable visibility while controlling the degree of the see-through property.

Although the RGB lights are used as the projected light, it is needless to say that the effect according to the present invention is achieved even in a case where only one color or other colors other than RGB is used as the projected light if needed.

<Other Effect>

Next, a concrete description will be given of the effect of the display device 100 according to the first to fourth embodiments.

(First)

Generally, when the image light is projected on a reflective type of the screen 5 (arranged so that the image light from the projector 3 is projected from the viewer's side) in the transmissive state, the image light is projected on an object in the background. For example, in the case of displaying images with red color, a little bit light filtering through the screen 5 makes the white object be seen to have a slightly red color. In this case, it is impossible to precisely recognize the color thereof even if the shape thereof can be recognized. Even in the case of a transparent type of the screen 5 (arranged so that the image light from the projector 3 is projected from the opposite side of the viewer), intensive light filtering through the screen 5 is leaked on the viewer to give the viewer undesirable feeling when the image light is projected on the screen 5 in the transmissive state. Generally, the screen 5 which switches its optical state between the scattering state and the transmissive state has a response characteristic that needs a predetermined transition time. Thus, at the timing when the image light is projected, it is necessary for the screen 5 to have completely finished the transition from the transmissive state to the scattering state, i.e., to have fully started up the scattering state.

In consideration of above-mentioned facts, before the timing of projecting the image light, the display device 100 starts the transition of the optical state of the display surface of the screen 5 where the image light is projected to the scattering state. In other words, when the control unit 30 synchronizes the timing of projecting (i.e., scanning) the image light with the timing of switching the optical state of the screen 5 to the scattering state, the control unit 30 delays the timing of projecting the image light compared to the timing of switching the optical state of the screen 5 to the scattering state. Hereinafter, the above-mentioned delay is referred to as "scan delay".

Thereby, in the case of a reflective type of the screen 5, the display device 100 can suppress the amount of the image light, which is projected from the projector 3 on the object in the background of the screen 5, to the minimum thereby to suppress the undesirable effect to color recognition. In the case of a transparent type of the screen 5, it is also possible to suppress the amount of the unnecessary leaking light entering the viewer.

(Second)

Generally, in the case of the time division method, regardless of time variation of the scattering characteristic of the screen 5, the lack of uniformity is not found in the image displayed on the screen 5. In contrast, in the case of the area segmentation method, the block noise whose boundary stands out is shown in the image displayed on the screen 5 when the scattering characteristics of segmented areas Td at each timing of the projection of the image light are not the same (i.e., not constant).

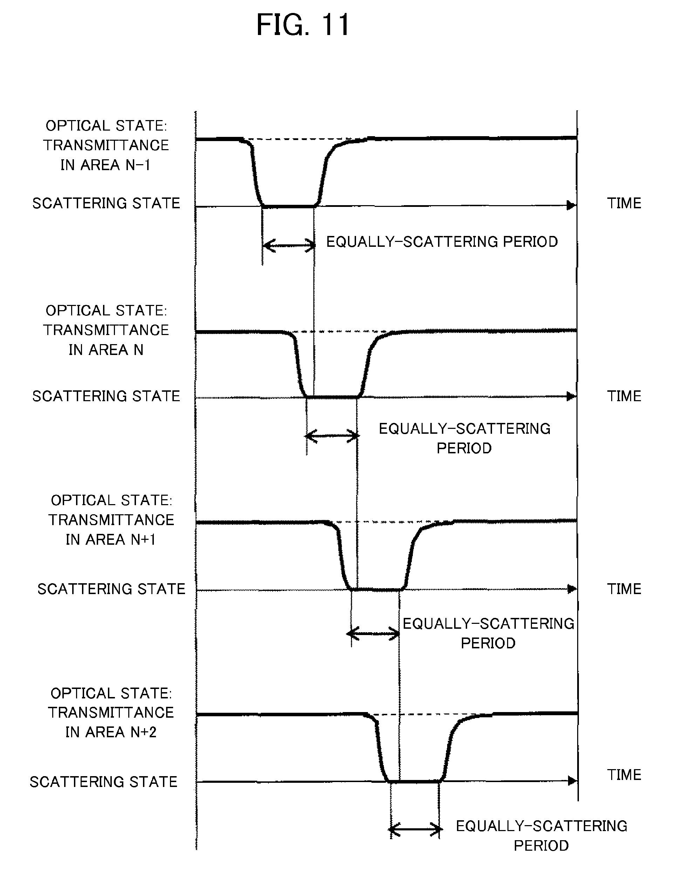

In consideration of these facts, in the case of the area segmentation method, the display device 100 keeps the scattering characteristic of each segmented area Td almost constant during the irradiation time as shown in FIG. 11. In addition, when the boundarybetween the two segmented areas Td is scanned and irradiated with the image light, the display device 100 sets the scattering characteristics corresponding to the two segmented areas Td to almost the same value. Thereby, the display device 100 can suppress the block noise.

(Third)

Generally, even in the see-through state, the transmittance of the display area in the display surface of the screen 5 is relatively low and the see-through state is mixed with the scattering state. This leads to the increase of the haze value (a ratio of the scattering transmittance to the total transmittance). In contrast, non-display area of the display surface of the screen 5 except for the display area is in the transmissive state in which the transmittance is high. As a result, there is a case where the boundary between the display area and the non-display area stands out as with the boundary between a frosted glass and a clear glass.

In consideration of these facts, the display device 100 additionally switches the optical state of the non-display area to the scattering state thereby to make the optical state of the non-display area gradually approximate to the transmissive state where the haze value is high. Thereby, it is possible to diminish the appearance of the boundary between the display area and the non-display area. It is noted that the optical state of the non-display area does not have to be switched unlike the display area.

<Modification>

Hereinafter, preferable modifications of the first to fourth embodiments will be described. Each modification can be applied to the first to fourth embodiments in combination.

(First Modification)

According to the first to fourth embodiments, the screen 5 is mainly classified into a reflective type whichmakes the viewer visually recognize the image by reflecting the light projected from the projector 3. However, the configuration to which the present invention can be applied is not limited to such a configuration. Instead of this, the screen 5 may be a screen classified into a transparent type which makes the viewer visually recognize the image by letting the light pass through, the screen being provided between the projector 3 and the viewer. Even in this case, the present invention can be preferably applied.

(Second Modification)

Regarding the area segmentation method, preferably, the control unit 30 switches the optical state so that the time ratio (referred to as "modulation time ratio Rt") of the scattering state to all the optical states with respect to each segmented area Td of the screen 5 is set to a constant value in common in addition to the above-mentioned processing. In this case, the modulation time ratio Rt is set to a value equal to or larger than the minimum value of time ratios at the time when the image light is projected on each segmented area Td. Thereby, the transmittance and the scattering state of the whole display area are equalized and the desirable see-through display without lack of uniformity can be achieved.

For example, in a case where the display area is vertically divided and scanned, if the scan speed is constant, the projector 3 scans the area so that the time ratio of the scattering state with respect to each segmented area Td and the length of the scan delay with respect to each segmented area Td are constant, respectively.

In a case where the scan speed varies in accordance with a part of a sine wave i.e., the scan speed is not constant, such as a case where a MEMS (Micro Electro Mechanical System) resonant mirror is used, the control unit 30 keeps the modulation time ratio Rt constant and controls the scan delay to synchronize the timing when the image light is projected on each segmented area Td with the timing when the optical state of the segmented area Td is switched to the scattering state. The above explanation is applied to either case where the display area is horizontally or vertically divided.

In addition, by modulating the non-display area with the same modulation time ratio Rt as the display area, the display device 100 can diminish the appearance of the boundary between the transparent part and the display part on the display thereby to achieve the see-through display without giving the viewer a feeling of strangeness.

It is noted that in the case of changing the modulation time ratio Rt of each segmented area Td, the display device 100 changes the modulation time ratio Rt of the each segmented area Td without changing the time length of the scan delay of each segmented area Td, for example.

(Third Modification)

If the scan speed of the image projection is not constant, in addition to the process according to the second modification, the display device 100 may divide the display area so that the width (referred to as "scan width") in the scan direction with respect to the segmented area Td where the scan speed is relatively high is wide and that the scan width with respect to the segmented area Td where the scan speed is relatively low is short. In this case, the display device 100 determines the scan delay of each segmented area Td in accordance with the above-mentioned distribution of the scan widths. Thereby, it is possible to decrease the output power of the drive circuit, and to reduce the manufacturing cost of the drive circuit without deteriorating the performance.

It is noted that the display device 100 may substantially expand the scan width by driving (outputting) the thinly-segmented areas Td at a time.

It is also noted that the display device 100 may divide the display area into rectangular blocks (including square) or hexagonal blocks in the case of horizontally and vertically dividing the display area. Thereby, even when the longitudinal direction of each segmented area Td is different from the scan direction thereof, the display device 100 can adjust the timing of switching the optical state to the scattering state so that the see-through property is sustained.

It is also noted that the display device 100 does not have to make the width of each segmented area Td thin. This is based on a fact that the same effect is obtained if the modulation time ratio Rt corresponding to thinly-segmented areas Td is the same as the modulation time ratio Rt used in other cases.

(Fourth Modification)

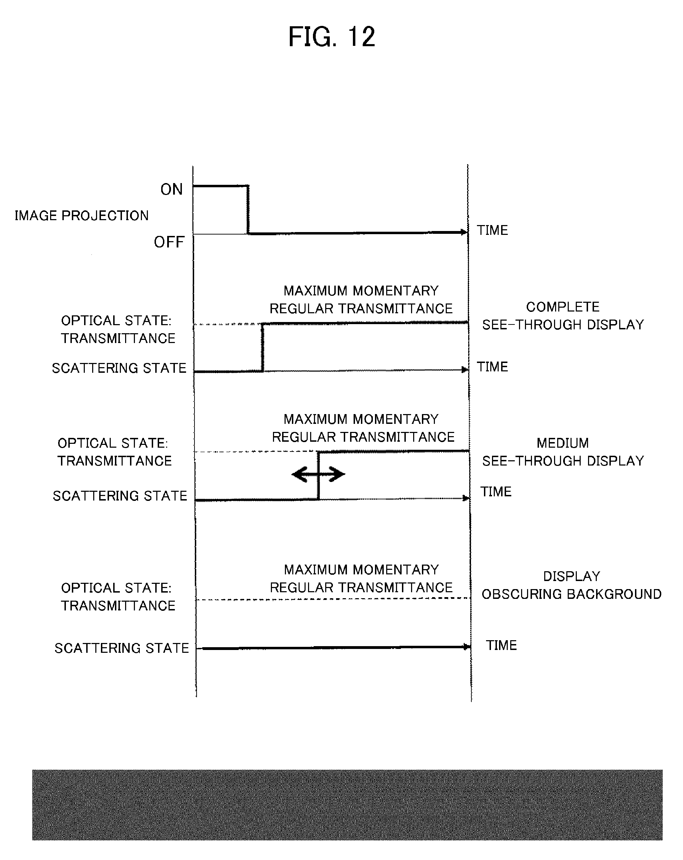

The regular transmittance is determined depending on the modulation time ratio Rt. Thus, the display device 100 may let the modulation time ratio Rt be a variable value having a range from its minimum value to one. FIG. 12 shows the above-mentioned example.

Thereby, the display device 100 can easily control the see-through property and can properly deal with a case of keeping any object (background object) in the background of the screen 5 out of sight of the viewer and a case of suppressing the background object from entering the sight of the viewer. For example, if the background object is a construction having a rapid variation of the contrast thereof or an object intensely illuminated, the high see-through property leads to the deterioration of visibility of the image projected on the screen 5. In this case, the display device 100 can improve the visibility by suppressing the see-through property.

Preferably, the display device 100 sets the upper limit and the lower limit of the modulation time ratio Rt so that the regular transmittance is within a predetermined range. Thereby, the display device 100 can determine the range of the regular transmittance. For example, by setting the upper limit and/or the lower limit to a low value, the display device 100 can enhance security. In contrast, by setting the upper limit and/or the lower limit to a high value, the display device 100 can lay weight on the viewer's privacy.

In the case of area segmentation method, the regular transmittance maybe a variable value with respect to each segmented area Td. In this case, the modulation time ratio Rt of the segmented areas Td on which the image light is not projected may be determined to a value equal to or smaller than the minimum value of the segmented areas Td onwhich the image light is projected. Thereby, the display device 100 can highlight the display by suppressing the see-through property, and can drastically increase the regular transmittance of the segmented area Td on which the image is not projected.

For example, in such a case where the display device 100 is provided on the dashboard of a vehicle, the display device 100 displays a see-through image that does not obscure only a lower part of the display area while driving, and displays an see-through image on the whole display area while the vehicle stops.

Preferably, the display device 100 determines the upper limit and the lower limit of the modulation time ratio Rt per each segmented area Td. Thereby, the display device 100 can determine the range of the regular transmittance per each segmented area Td. For example, regarding the segmented areas Td corresponding to a display portion needed for calling for attention, the display device 100 sets the lower value and/or the upper value of the modulation time ratio Rt to a higher value compared to other segmented areas Td. Thereby, it is possible to highlight the display by blocking out the background object.

(Fifth Modification)

Whereas the control unit 30 is provided in the projector 3 in FIG. 1A, FIG. 3A and FIG. 5A, the configuration to which the present invention can be applied, however, is not limited to the configuration. Instead, the control unit 30 may be provided outside the projector 3. Even in this case, the control unit 30 can control the optical state of the screen 5 by sending the control signal Sw to the screen 5.

INDUSTRIAL APPLICABILITY

Preferably, this invention can be applied to a device which displays images.

BRIEF DESCRIPTION OF REFERENCE NUMBERS

[0109]

| 3   | Projector      |
|-----|----------------|
| 5   | Screen         |
| 30  | Control unit   |
| 100 | Display device |

**Claims**

1. A display device (100) comprising:

   a screen (5) capable of changing an optical state of each segmented area in a display area thereof;
   a projector (3) configured to project image light for displaying images on the segmented areas of the screen by means of time division control; and
   a control unit (30) configured to switch the optical state of a segmented area of the screen from a transmissive state to a scattering state so that the segmented area has a regular transmittance with which, when viewed from either side of the screen, an object on the opposite side of the screen can be recognized regardless of whether or not the image light is projected, the segmented area including a spot where the image light is projected, wherein the control unit switches the optical state of another segmented area from a transmissive state to a scattering state before switching the optical state of one of the segmented areas from a scattering state to a transmissive state.

2. The display device according to claim 1,
   wherein the control unit switches the optical state of the other segmented area to a scattering state while the one of the segmented area is in a scattering state.

3. The display device according to claim 1 or 2,
   wherein the screen is capable of changing the optical state of segmented areas into which a display area is divided in one direction, and
   wherein the projector projects the image light on the segmented areas of the screen by means of time division control in a direction where the segmented areas are arranged.

4. The display device according to claim 1 or 2
   wherein the screen is capable of changing the optical state of segmented areas into which a display area is vertically or horizontally divided or segmented areas each of which has a stripe shape.

5. The display device according to any one of claims 1 to 4,
   wherein the control unit controls the regular transmittance of each of the segmented areas of the screen in a transmissive state.

6. The display device according to any one of claims 1 to 4,
   wherein the control unit controls a time ratio between a transmissive state and a scattering state with respect to each of the segmented areas of the screen in a transmissive state.

7. The display device according to any one of claims 1 to 4,
   wherein, depending on whether or not the image light is projected, the control unit switches the optical state of each of the segmented areas of the screen between a transmissive state in which a regular transmittance is higher than a predetermined value and a state where a transmissive state and a scattering state is alternately actuated so that the segmented area has a regular transmittance with which, when viewed from either side of the screen, an object on the opposite side of the screen can be recognized.

8. The display device according to any one of claims 1 to 4,
   wherein, depending on whether or not the image light is projected, the control unit switches the optical state of each of the segmented areas of the screen between a state where a transmissive state is kept and a state where a transmissive state and a scattering state is alternately actuated so that the segmented area has a regular transmittance with which, when viewed from either side of the screen, an object on the opposite side of the screen can be recognized.

9. The display device according to any one of claims 1 to 4,
wherein, in a case where the control unit switches the optical state between a transmissive state and a scattering state with respect to each of the segmented areas into which the screen is divided and where the control unit changes a scan speed at which the image light scans on the screen, width of a segmented area where the scan speed is high is longer in a scan direction than width of a segmented area where the scan speed is low.

10. The display device according to any one of claims 1 to 4,
wherein, in a case where the control unit switches the optical state between a transmissive state and a scattering state with respect to each of the segmented areas into which the screen is divided, the control unit equalizes each time ratio between a transmissive state and a scattering state with respect to each of the segmented areas.

11. The display device according to any one of claims 1 to 4,
wherein the control unit controls the regular transmittance of each of the segmented areas of the screen by changing a time ratio between a transmissive state and a scattering state with respect to the area.

12. The display device according to any one of claims 1 to 4,
wherein the control unit switches the optical state of the segmented area including the spot where the image light is projected to a scattering state before the image light is projected.

13. The display device according to any one of claims 1 to 4,
wherein in a case where the control unit switches the optical state between a transmissive state and a scattering state with respect to each of the segmented areas into which the screen is divided, the control unit equalizes scattering characteristics of the segmented areas while the image light is projected thereon.

# FIG. 1A

100

5

Sw

3

30

CONTROL
UNIT

# FIG. 1B

5

51

50

3

52

53

54

□ : TRANSMISSIVE STATE

▧ : SCATTERING STATE

# FIG. 1C

5

51

3    52

50

53

54

□ : TRANSMISSIVE STATE

▧ : SCATTERING STATE

# FIG. 2

ON

IMAGE PROJECTION

OFF — TIME

OPTICAL STATE:
TRANSMITTANCE

MAXIMUM MOMENTARY
REGULAR TRANSMITTANCE

COMPLETE
SEE-THROUGH DISPLAY

SCATTERING STATE — TIME

OPTICAL STATE:
TRANSMITTANCE

MAXIMUM MOMENTARY
REGULAR TRANSMITTANCE

MEDIUM MOMENTARY TRANSMISSIVE
STATE

MEDIUM
SEE-THROUGH DISPLAY

SCATTERING STATE — TIME

OPTICAL STATE:
TRANSMITTANCE

MAXIMUM MOMENTARY
REGULAR TRANSMITTANCE

DISPLAY
OBSCURING BACKGROUND

SCATTERING STATE — TIME

# FIG. 3A

# FIG. 3B

# FIG. 4A

FRAME PERIOD

SCATTERING STATE
ON

TRANSMISSIVE STATE
ON

# FIG. 4B

FRAME PERIOD

SCATTERING STATE
ON

TRANSMISSIVE STATE
ON

# FIG. 5A

# FIG. 5B

# FIG. 6

# FIG. 7

# FIG. 8

# FIG. 9

TIME

FRAME PERIOD

SCAN
POSITION

L5  L6  L7  L8  L9  L10  L11  L12

Lr3  Lg3  Lb3  Lr4

# FIG. 10

TIME

FRAME PERIOD

L13

L16

L14

L15

Lr6

Lg6

Lb6

SCAN
POSITION

Lr5  Lg5  Lb5

# FIG. 11

# FIG. 12

<table>
<tr><td colspan="2"><b>INTERNATIONAL SEARCH REPORT</b></td><td>International application No.<br>PCT/JP2011/054340</td></tr>
</table>

| A. CLASSIFICATION OF SUBJECT MATTER |
|---|
| *G03B21/00*(2006.01)i, *G03B21/62*(2006.01)i |

According to International Patent Classification (IPC) or to both national classification and IPC

| B. FIELDS SEARCHED |
|---|
| Minimum documentation searched (classification system followed by classification symbols)<br>G03B21/00-21/30, G03B21/56-21/64, G02B26/00-26/08, G02B27/00-27/64 |

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y<br>A | JP 2004-184979 A  (Optrex Corp., Asahi Glass Co., Ltd.),<br>02 July 2004 (02.07.2004),<br>paragraphs [0059] to [0072], [0089] to [0093];<br>fig. 3 to 4, 11<br>& US 2005/0243078 A1      & EP 1546795 A<br>& WO 2004/023200 A1      & KR 10-2005-0057161 A<br>& CN 1688916 A           & TW 275827 B | 1,7-8,12<br>2-6,10-11,13<br>9 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>15 April, 2011 (15.04.11) | Date of mailing of the international search report<br>26 April, 2011 (26.04.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/054340 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 05-506109 A  (Raychem Corp.),<br>02 September 1993 (02.09.1993),<br>page 5, upper left column, line 12 to upper<br>right column, line 13; fig. 4 to 5<br>& US 5075789 A          & US 5175637 A<br>& EP 523147 A           & WO 1991/015928 A2<br>& DE 69120938 C         & DE 69120938 T<br>& CA 2079790 A          & AT 140576 T<br>& AT 140576 E           & CA 2079790 A1 | 2-3,5,13 |
| Y | JP 2005-024763 A  (Optrex Corp., Asahi Glass<br>Co., Ltd.),<br>27 January 2005 (27.01.2005),<br>paragraphs [0040] to [0096]; fig. 1 to 10<br>(Family: none) | 2,4-5,10,13 |
| Y | JP 2008-065022 A  (Matsushita Electric<br>Industrial Co., Ltd.),<br>21 March 2008 (21.03.2008),<br>paragraphs [0071] to [0079]; fig. 9 to 12<br>(Family: none) | 2,4-5,10,13 |
| Y | JP 06-067217 A  (Nissan Motor Co., Ltd.),<br>11 March 1994 (11.03.1994),<br>paragraphs [0039] to [0040]; fig. 2 to 3<br>(Family: none) | 6,11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008076973 A
- JP 2008310260 A
- JP 2006091258 A
- JP 2005114913 A
- JP 2003121943 A
- JP H05191726 B